# EUROPEAN PATENT SPECIFICATION

(11) **EP 2 566 199 B1**
(45) Date of publication and mention of the grant of the patent: **27.05.2015**
(21) Application number: 11774320.3
(22) Date of filing: 22.03.2011
(51) Int. Cl.: H04W 4/00, H04W 4/20

(54) **METHOD AND SYSTEM FOR TRANSMITTING SMALL DATA PACKETS**
VERFAHREN UND SYSTEM ZUR ÜBERTRAGUNG KLEINER DATENPAKETE
PROCÉDÉ ET SYSTÈME POUR TRANSMETTRE DES PAQUETS DE DONNÉES DE PETITE TAILLE

(30) Priority: 26.04.2010 CN 201010159393
(43) Date of publication of application: 06.03.2013
(73) Proprietor: ZTE Corporation, Shenzhen, Guangdong 518057 (CN)
(72) Inventor: XIE, Baoguo, Shenzhen Guangdong 518057 (CN); LI, Zhijun, Shenzhen Guangdong 518057 (CN)
(74) Representative: Hannke, Christian
(86) International application number: PCT/CN2011/072040
(87) International publication number: WO 2011/134329

(56) References cited:
- CN-A- 101 931 931
- US-A1- 2006 023 658
- KPN: "Key Issue - Offline Small Data Transmission", 3GPP DRAFT; S2-101453_S2_78_TD_KEY ISSUE - OFFLINE SMALL DATA TRANSMISSION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. San Francisco, USA; 20100222, 16 February 2010 (2010-02-16), XP050433965, [retrieved on 2010-02-16]
- HUAWEI: "Solution for MTC Monitoring", 3GPP DRAFT; S2-100692_REVISION OF S2-100240_SOLUTION FOR MONITORING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Shenzhen; 20100118, 20 January 2010 (2010-01-20), XP050433120,
- "3 rd Generation Partnership Project; Technical Specification Group Services and System Aspects; System Improvements for Machine-Type Communications; (Release 10)", 3GPP STANDARD; 3GPP TR 23.888, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.3.2, 22 March 2010 (2010-03-22), pages 1-33, XP050401986,
- 'Technical Specification Group Services and System Aspects; System Improvements for Machine-Type Communications; (Release 10)' 3GPP TR 23.888 V0.3.2 March 2010, XP002589912

## Description

### TECHNICAL FIELD

The present disclosure relates to the field of mobile communications, and in particular to a method and system for transmitting a small data packet.

### BACKGROUND

Currently, Machine to Machine (M2M) services are widely applied gradually, e.g., applied to logistics systems, remote meter reading, intelligent home, and etc. M2M service providers develop M2M services using existing wireless networks, for example, Packet Switch (PS) networks such as a General Packet Radio service (GPRS) network, an Evolved Packet System (EPS) network, etc. Since there is obvious diversity between an M2M service and a Human to Human (H2H) service, it is necessary to optimize the existing networks, so as to obtain optimal network management quality and network communication quality.

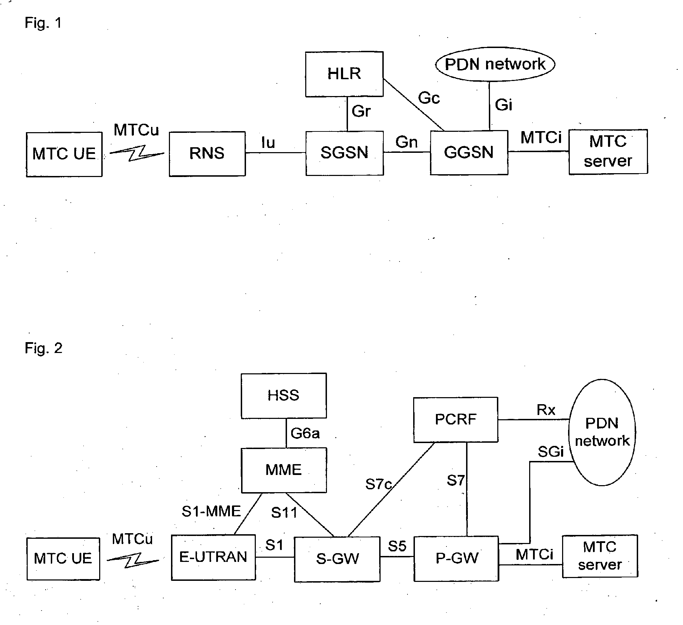

The document entitled "Key Issue-Offline Small Data Transmission" proposes a solution for the section on Key Issue-Offline Small Data Transmission in Section 5.5 of the 3GPP TR 23.888, and the proposed solution is to encapsulate user data to be sent from MTC Device to MTC server in the Attach Request message of the Attach procedure. The document entitled "Solution for MTC Monitoring" proposes a mechanism for MTC Monitoring. And the document entitled "3rd Generation Partnership Project; Technical Specification Group Services and System Aspects; System Improvements for Machine-Type Communications; (Release 10)" studies and evaluates aspects of the System Improvement for Machine Type Communications requirements specified in TS22. 368. A GPRS network is a 2nd Generation mobile communication network based on Packet Switch. When a 3rd Generation mobile communication system comes forth, the GPRS evolves into a Universal Mobile Telecommunication System Packet Switch (UMTS PS) domain. As shown in Fig. 1 which is a schematic diagram of a network architecture of UMTS PS, the network architecture consists of the following network elements:
a Radio Network System (RNS), which consists of a NodeB and a Radio Network Controller (RNC), wherein the NodeB provides air interface connection for a terminal, and the RNC is mainly configured to manage radio resources and control the NodeB; the RNC and the NodeB are connected with each other via an lub interface, and the terminal accesses the Packet Core network of the UMTS via the RNC;
a Serving GPRS Support Node (SGSN), which is configured to store router area location information of a user, and is responsible for security and access control, wherein the SGSN is connected with the RNS via an lu interface;
a Gateway GPRS Supporting Node (GGSN), which is responsible for the distribution of IP Addresses of terminals and is functioned as a gateway to an external network, wherein it is connected with the SGSN via a Gn interface;
a Home Location Register (HLR), which is configured to store subscription information of a user and a current located SGSN address, and which is connected with the SGSN via a Gr interface and connected with the GGSN via a Gc interface;
a Packet Data Network (PDN), which is configured to provide a packet-based service network for a user, and is connected with the GGSN via a Gi interface; and
a Machine-Type Communications Server (MTC Server) which is an M2M application server, and is configured to provide M2M application for a user, and is connected with the GGSN via an MTCi interface.

In Fig. 1, Machine-Type Communications User Equipment (MTC UE) needs to transmit data information to the MTC server or other MTC UEs via the GPRS network. The GPRS network creates a tunnel among RNC↔SGSN↔GGSN for the transmission, the tunnel is based on a GPRS Tunneling Protocol (GTP), and the data information achieves reliable transmission via a GTP tunnel.

With the development of wireless broadband technology, a service layer requires more and more higher on the broadband, time delay and other performance of a transmission layer. In order to improve the network performance and reduce the network construction and operation cost, the 3rd Generation Partnership Project (3GPP) is dedicated to the research on System Architecture Evolution (SAE) with the purpose of making an Evolved Packet Core (EPC) capable of providing a higher transmission rate, a shorter transmission time delay and an optimized packet, and supporting mobility management among an Evolved Universal Terrestrial Radio Access (E-UTRAN) network, a Universal Terrestrial Radio Access (UTRAN) network, a Wireless Local Area Network (WLAN) and other non-3GPP access networks.

An architecture of current SAE is as shown in Fig. 2, wherein a network element included in an Evolved Radio Access Network (E-RAN) is an Evolved NodeB (eNB or eNodeB) configured to provide radio resources for user accepted; a Packet Data Network (PDN) is a network configured to provide a service for a user; an EPC provides a lower time delay, and allows access to more wireless access systems, wherein it includes the following network elements:
a Mobility Management Entity (MME), which is a control-plane functional entity as well as a server for temporarily storing user data, and is responsible for managing and storing User Equipment (UE) context, such as a user identifier, a mobility management state, user security parameters, etc, for distributing a temporary identifier for a user, and for authenticating the user when the UE resides in a tracking area or the network;
a Serving Gateway (S-GW), which is a user plane entity, and is responsible for route processing of user-plane data, for terminating downlink data of UE which is in an ECM_IDLE state, and for managing and storing SAE bearer context of the UE, e.g., IP bearer service parameters, network internal route information, and etc.; and the S-GW is an anchor point of an internal user plane of the 3GPP system, and one user can have only one S-GW at a time;
a PDN Gateway (P-GW), which is a gateway through which UE accesses the PDN, is responsible for allocating an IP Address of a user, and is also a mobility anchor point for 3GPP and non-3GPP access systems; wherein the functions of the P-GW further include policy enforcement and charging support; a user can access a plurality of P-GWs at a time; a Policy and Charging Enforcement Function (PCEF) Entity is also located in the P-GW;
a Policy and Charging Rules Function (PCRF) Entity, which is responsible for providing policy control and charging rules to a PCEF;
a Home Subscriber Server (HSS), which is responsible for storing user subscription data constantly; wherein the content stored by the HSS includes: an International Mobile Subscriber Identification (IMSI) of UE, an IP Address of the P-GW.

The S-GW and P-GW may be integrated in physical, and the user plane network elements of the EPC system include the S-GW and the P-GW.

An MTC Server is configured to provide M2M application for a user, and is connected with the P-GW through an MTCi interface. The MTC Server is mainly responsible for collecting information and storing/processing data of MTC UE, and performs necessary management on the MTC UE. The MTC UE is similar to UE, is responsible for collecting information of a certain number of collectors, accesses a Core Network via a RAN node, and interacts data with the MTC Server.

In Fig. 2, the MTC UE needs to transmit data information to the MTC Server through an EPS network. The EPS network creates a GTP tunnel between S-GW↔P-GW for the transmission, and the data information achieves reliable transmission via the GTP tunnel.

Fig. 3 is a flowchart for MTC UE to access an EPS network, to implement network attachment and IP bearer creation in the related art, including the following steps:
Step 301, in order to access an SAE network, the MTC UE initiates a network attach request to an eNodeB, wherein the network attach request includes information such as an IMSI, network access ability of the MTC UE, Protocol Configuration Options (PCO) parameters (including parameters such as an indication of a request for allocating IP, and etc.), and an attachment type, and etc.;
Step 302, the eNodeB chooses an MME to serve the MTC UE, and forwards the attach request to the MME, and at the same time includes important information such as an identifier, an attachment type and access ability of the MTC UE, PCO parameters, and etc. to the MME; wherein the PCO parameters are transmitted over the MME transparently;
Step 303, the MME sends an authentication data request message (including the IMSI) to an HSS, the HSS firstly determines subscription user data corresponding to the IMSI; if no subscription is found or the IMSI has already been listed in a blacklist, then the HSS returns an authentication data response including an error reason to the MME; if the subscription user data corresponding to the IMSI is found, then the HSS returns an authentication data response message (including an authentication vector) to the MME;
the MME executes an authentication flow to verify the legality of the IMSI of the MTC UE, and executes a safe mode flow to enable safe connection;
Step 304, the MME sends the HSS of a home network a location update request which includes an identifier of the MME and an identifier of the MTC UE, to notify the HSS of an area the MTC UE currently accesses;
Step 305, the HSS finds subscription user data of the MTC UE according to the identifier of the MTC UE, and sends the subscription user data to the MME; where the subscription user data mainly includes information such as a default Access Point Name (APN), a bandwidth size, and etc.;
the MME receives the subscription user data, and checks whether the MTC UE is allowed to access the network, and returns a user accepted response to the HSS; if the MME finds that the MTC UE has problems such as roaming restriction or access restriction, and etc, then the MME prohibits the MTC UE from attaching, and notifies the HSS;
Step 306, the HSS sends a location update confirmation response to the MME;
Step 307, the MME chooses an S-GW for the MTC UE, and sends the MTC UE a request for creating a default bearer; in the request, the necessary information the MME notifies the S-GW includes: the identifier of the MTC UE, the identifier of the MME, an indication for allocating an IP address for the MTC UE, default bandwidth information, a P-GW address, and etc.;
Step 308, the S-GW sends a request for creating a default bearer to the P-GW; in the request, the necessary information the S-GW notifies the P-GW includes: an address of the S-GW, default bandwidth information, PCO parameters (including parameters such as an indication for allocating an IP address for the MTC UE, and etc.), and etc.;
Step 309, if necessary, the P-GW makes a request for policy and charging rules and decision-making information, which are configured for the MTC UE, to the PCRF;
Step 310, the P-GW creates a default bearer and returns a bearer create response to the S-GW according to the policy and charging decision-making information returned by the PCRF;
Step 311, the S-GW sends a default bearer create response to the MME;
Step 312, the MME sends an attach acceptance response to the eNodeB to indicate that the request for attaching to the network, which comes from the MTC UE, is accepted; wherein the response includes the address of the S-GW and a Tunnel Endpoint Identifier (TEID);
Step 313, the eNodeB stores the S-GW address and the TEID, and sends a radio bearer create request to the MTC UE to request the MTC UE to store important information of the bearer creation and open a corresponding port; where the radio bearer create request includes a bearer network ID, an address of the P-GW, an IP address allocated to the MTC UE, bandwidth information, and etc.;
Step 314, the MTC UE sends a radio bearer create response to the eNodeB to indicate that the radio bearer creation is completed;
Step 315, the eNodeB notifies the MME that the attach process is completed, wherein the notification message includes a TEID and address of the eNodeB;
Step 316, the MME sends a bearer update request to the S-GW, and notifies the S-GW of the TEID and address of the eNodeB serving the MTC UE, and creates a GTP protocol based-S1 access bearer between the eNodeB and the S-GW;
Step 317, the S-GW sends a bearer update response to the S-GW; and
Step 318, if the P-GW is not designated by the HSS, then the MME sends a location update request to the HSS, and notifies the HSS of the address information of the P-GW serving the MTC UE, and the HSS updates the information.

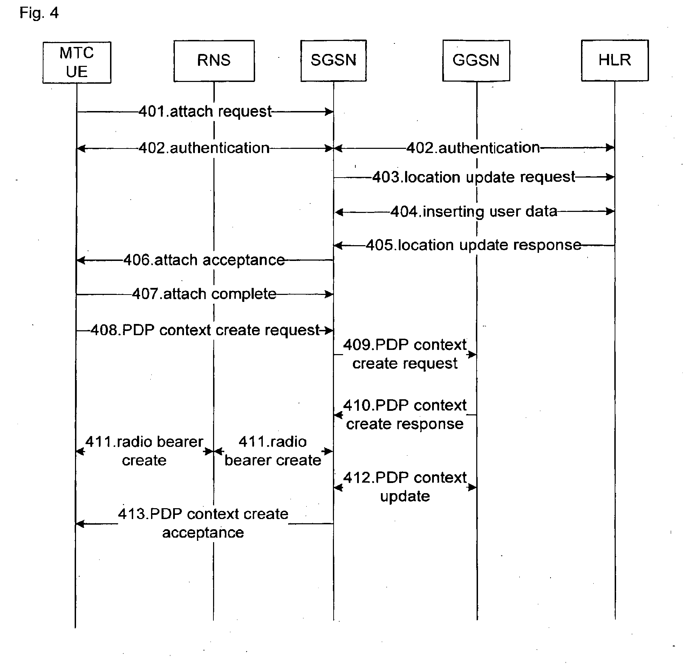

Fig. 4 is a flowchart for MTC UE to access a GPRS network, to implement network attachment and create Packet Data Protocol (PDP) context in the related art, including the following steps:
Step 401, the MTC UE initiates an attach request to an SGSN via an RNS for the first time, wherein the attach request includes parameters such as an attachment type, an IMSI, and etc.; and the RNS routes the message to the SGSN by taking the IMSI of the MTC UE as a request identifier according to the load condition;
Step 402, the SGSN makes a request for authentication on the IMSI to the HLR, the HLR downloads an authentication verification parameter according the IMSI, and the SGSN authenticates and verifies the UE;
Step 403, the SGSN sends a location update request to the HLR, wherein the request includes parameters such as an SGSN number and address, the IMSI, and etc.;
Step 404, the HLR downloads subscription data corresponding to the IMSI to the SGSN, the SGSN performs an access control check on the MTC UE to check whether the MTC UE has area restriction or access restriction, and then returns a data insert response to the HLR;
Step 405, the HLR confirms the location update message, and sends a location update response to the SGSN;
if the location update request is rejected by the HLR, the SGSN then rejects the attach request from the MTC UE;
Step 406, the SGSN allocates a Packet-Temporary Mobile Subscriber Identity (P-TMSI) to the MTC UE, and sends the attach acceptance message to the MTC UE, wherein the message includes information such as the P-TMSI allocated to the MTC UE, and etc.;
Step 407, if the P-TMSI is updated, the MTC UE returns an attach complete message to the SGSN for confirmation and completes the GPRS attach process.
Step 408, the MTC UE applies to activate PDP context and create a GTP bearer;
the MTC UE sends an PDP context activate request to the SGSN, wherein the request includes information such as a PDP type, a PDP address, an APN, PCO parameters (an indication of requesting an IP address, and etc.), and etc.;
Step 409, the SGSN finds an address of a GGSN according to the APN and creates an TEID for the PDP context, and sends the PDP context create request to the GGSN, wherein the PDP context create request includes information such as the PDP type, the PDP address, the APN, the TEID, the PCO parameters, and etc.;
Step 410, the GGSN allocates a new entrance and relevant resources for the PDP context, and returns a PDP context activate response message to the SGSN, wherein the PDP context activate response message includes parameter information such as the TEID, PCO, and etc.;
Step 411, the SGSN sends a Radio Access Bearer (RAB) allocate message to the RNS to create a radio bearer for the PDP context, wherein the RAB allocate message includes information such as an RAB ID, a TEID, the SGSN address, a GoS profile, and etc.;
the RNS executes a radio bearer create flow, and makes a request for creating a user plane radio bearer for the present service; then the RNS returns an RAB allocate response message to the SGSN, wherein the RAB allocate response message includes information such as an RNC address, the TEID, and etc, and a GTP tunnel is created at an lu interface;
Step 412, the SGSN sends a PDP context update message to the GGSN to notify the GGSN of information such as the TEID and the RNC address, and etc.; the GGSN updates a tunnel entrance address of the RNC, and user plane data can be sent from RNC to the GGSN via the GTP tunnel, and the MTC UE can send uplink and downlink data packets via the GGSN; and
Step 413, after the PDP context update is completed, the SGSN sends a PDP context create acceptance message to the MTC UE to notify the MTC UE of a PDP context creation success, and the uplink and downlink data packets of the MTC UE can be transmitted through the bearer created by the PDP context.

The M2M service is a networking application and service with an intelligent interaction between machine terminals as a core. It uses intelligent machine terminals, and transmits information via a wireless network, and provides an infomationization solution to clients to fulfill the infomationization requirements of the clients on monitoring, command scheduling, data collecting, measuring, and etc.

The object of M2M communication is machine to machine, and the MSM communication may be communication between human and machine, or communication between machine and server, or communication between different intelligent terminals. MTC devices for different application have different characteristics, e.g., elevator devices such as an electrical elevator have low mobility, and have a Packet Switched only (PS only) attribute, while monitoring and alarming devices further have attributes such as low data transmission, high availability, and etc, besides the low mobility and the PS only. Therefore, it is necessary to perform different system optimization for MTC devices with different application, so as to manage, monitor and pay the MTC devices effectively.

Small Data Transmission is a requirement with a higher priority in M2M application, and is characterized in subscription with an HSS; for this characteristic, a network needs to reduce mobility management and signaling interaction, and improve a network resource utilization ratio. Small Data Transmission may be divided into two manners, i.e., online and offline; the online manner refers to that an M2M terminal needs to perform data interaction with an MTC server frequently, thus, the M2M terminal maintains network attachment, and performs the data interaction with the MTC server by a Short Messaging Service (SMS), a default bearer, and etc.; the offline manner refers to that an M2M terminal performs interaction with the MTC server via the network accidentally. With respect to the transmission in the offline state, since mobility management and signaling interaction are performed more frequently, bearer resources are needed to be distributed excessively, consequently, it is not good for improving the utilization ratio of network resources.

### SUMMARY

In view of these, the disclosure mainly aims to provide a method and a system for transmitting a small data packet, so as to reduce the mobility management and signaling interaction in an offline transmission state, and further to improve the utilization ratio of network resources.

In order to realize the purpose above, the technical solution of the present disclosure is realized in this way.

The present disclosure provides a method for transmitting a small data packet, including:
carrying, by Machine-Type Communications User Equipment (MTC UE), a small data packet needed to be sent to a media gateway in a network during a process of creating a bearer; and
sending, by the media gateway, the received small data packet to an MTC server.

The carrying, by Machine-Type Communications User Equipment (MTC UE), a small data packet needed to be sent to a media gateway in a network during a process of creating a bearer may include:
including, by the MTC UE, the small data packet needed to be sent into Protocol Configuration Options (PCO) parameters of an attach request or a bearer create request and sending the small data packet to the media gateway, when the MTC UE initiates the attach request or the bearer create request.

The method may further include:
including a small data packet sending identifier into the PCO parameters; and identifying, by the media gateway, whether it is needed to send the small data packet according to the small data packet sending identifier.

The method may further include:
including a Fully Qualified Domain Name (FQDN) of the MTC server into the PCO parameters; and inquiring, by the media gateway, an address of a corresponding MTC server from a Domain Name System (DNS) server based on the FQDN and sending the small data packet to the MTC server corresponding to the address.

The method may further include:
statically configuring, by the media gateway, a corresponding relationship between an MTC UE identifier and an MTC server address, and inquiring, by the media gateway, the corresponding relationship according to an MTC UE identifier included in the attach request or the bear create request to obtain an address of a corresponding MTC server and sending the small data packet to the MTC server corresponding to the address.

The method may further include:
after sending the small data packet, returning, by the media gateway, a response message of rejecting bearer creation to the MTC UE and not allocating core network media bearer and radio bearer resources for the MTC UE; and including PCO parameters into the response message of rejecting bearer creation, and including an indication indicative of small data packet sending completion into the PCO parameters.

The present disclosure further provides a system for transmitting a small data packet, wherein the system includes: MTC UE, a media gateway and an MTC server, wherein,
the MTC UE is configured to carry a small data packet needed to be sent to the media gateway in a network during a process of creating a bearer;
the media gateway is configured to send the received small data packet to an MTC server; and
the MTC server is configured to receive the small data packet from the media gateway.

The MTC UE may be further configured to, when the MTC UE initiates an attach request or a bearer create request, include the small data packet needed to be sent into Protocol Configuration Options (PCO) parameters of the attach request or the bearer create request and to send the small data packet to the media gateway.

The PCO parameters may further include a small data packet sending identifier;
correspondingly, the media gateway may be further configured to identify whether it is needed to send the small data packet according to the small data packet sending identifier.

The PCO parameters may include an FQDN of the MTC server;
correspondingly, the media gateway may be further configured to inquire an address of a corresponding MTC server from a Domain Name System (DNS) based on the FQDN, and to send the small data packet to the MTC server corresponding to the address.

The media gateway may be further configured to statically configure a corresponding relationship between an MTC UE identifier and an MTC server address, and to inquire the corresponding relationship according to an MTC UE identifier included in the attach request or the bearer create request to obtain an address of a corresponding MTC server when receiving an attach request or bearer create request from the MTC UE, and to send the small data packet to the MTC server corresponding to the address.

The media gateway may be further configured to, after sending the small data packet, return a response message of rejecting bearer creation to the MTC UE, and not allocate core network media bearer and radio bearer resources for the MTC UE; the response message of rejecting bearer creation includes an indication indicative of small data packet sending completion into the PCO parameters.

The present disclosure provides a method and a system for transmitting a small data packet, wherein MTC UE carries a small data packet needed to be sent to a media gateway in a network during a process of creating a bearer; the media gateway sends the received small data packet to the MTC server. With the present disclosure, when the MTC UE initiates an access request to a PS network, it directly includes the small data packet into the access request message and carries the small data packet to the media gateway, thus avoiding allocating core network media bearer and radio bearer resources, reducing the processing related to application for and distribution of a PCC policy and the signaling interaction, reducing signaling related to media bearer creation and radio resource bearer creation, optimizing a network flow, and fulfilling the application requirement that the M2M terminal sends a small data packet in an offline state.

### BRIEF DESCRIPTION OF THE DRAWINGS

Fig. 1 is a diagram of a UMTS PS network architecture in the related art;
Fig. 2 is a diagram of an SAE network architecture in the related art;

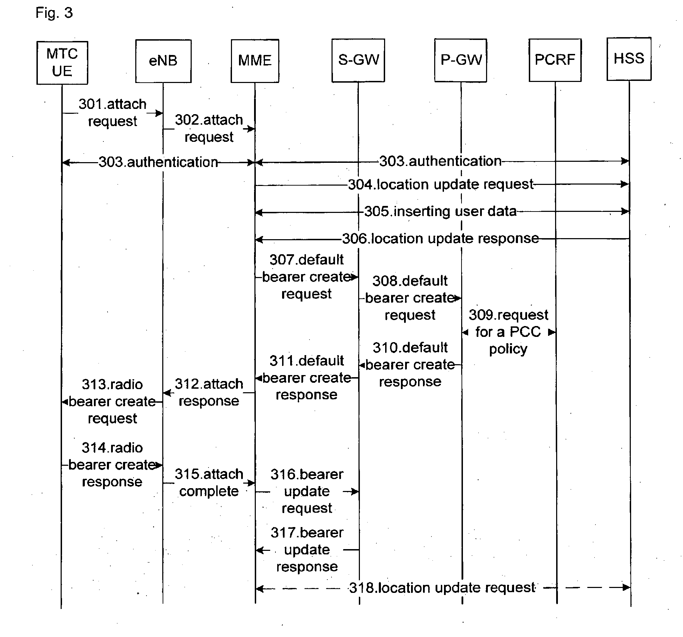

Fig. 3 is a flowchart for MTC UE to access an EPS network, to implement network attachment and IP bearer creation in the related art;
Fig. 4 is a flowchart for MTC UE to access a GPRS network, to implement network attachment and create Packet Data Protocol (PDP) context in the related art;

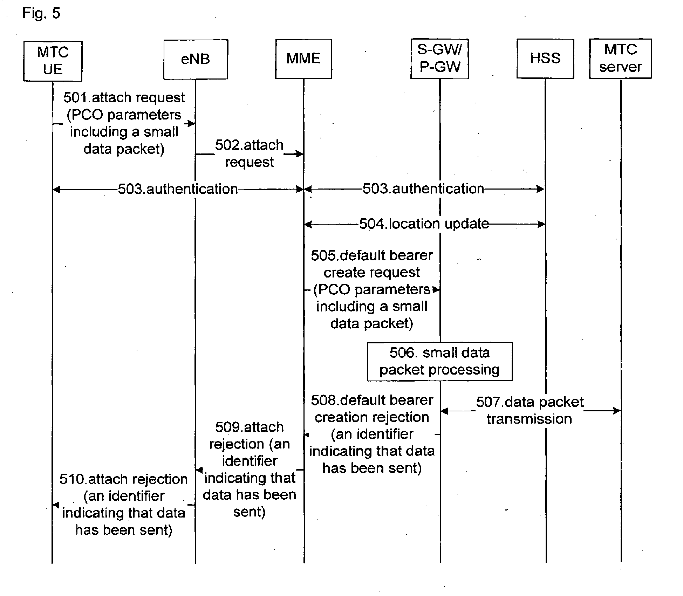

Fig. 5 is a flowchart for MTC UE to attach an EPS network, to carry a small data packet and implement communication with an MTC server in an embodiment of the present disclosure; and

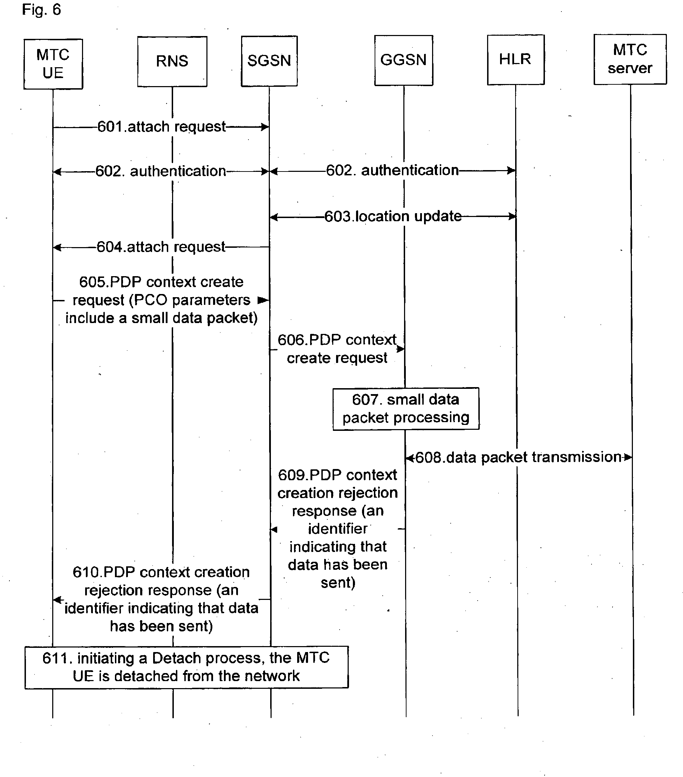

Fig. 6 is a flowchart for MTC UE to attach a GPRS network, to carry a small data packet and implement communication with an MTC server in an embodiment of the present disclosure.

### DETAILED DESCRIPTION

The technical solution of the disclosure is described below with reference to the accompanying drawings and embodiments in detail.

The present disclosure needs to solve a problem that MTC UE sends a small data packet under the offline state; and in a process of sending the small data packet, it is needed to effectively utilize network resources and reduce signaling interaction and mobility management. Based on the above requirements, the MTC UE of the present disclosure carries a small data packet needed to be sent to a media gateway in a network during a process of creating a bearer; and the media gateway sends the received small data packet to an MTC server.

When the MTC UE initiates an attach request or a bearer create request, the MTC UE directly includes a small data packet into the request message and indicates whether there is a small data packet to be sent; when receiving the attach request or the bearer create request, the media gateway identifies from PCO parameters an indication of the sending of a small data packet, and then extracts the small data packet from the PCO parameters and encapsulates the small data packet into an IP packet suitable for transmission through an MTCi interface. Moreover, the media gateway needs to find an MTC Server where the MTC UE locates, and then creates safe IP connection with the MTC Server, and sends the small data packet of the MTC UE to the MTC Server, wherein the corresponding MTC Server can be found by making use of a Fully Qualified Domain Name (FQDN) to perform addressing in a Domain Name System (DNS).

After the sending of the small data packet is completed, the media gateway directly rejects creation of a media bearer according to the policy, and does not allocate an IP address, core network bearer resources and radio resources for the MTC UE, thereby improving the utilization ratio of network resources. Moreover, the policy interaction of Policy and Charging Control (PCC) and the signaling interaction for creating a radio bearer are saved, and the signaling processing is reduced. The MTC UE enters an offline state again after the sending of the small data packet is completed, and will not be recovered until the sending of the next small data packet is triggered.

The method for transmitting a small data packet in the present disclosure is further described below with reference to embodiments in detail.

The first embodiment of the disclosure is as shown in Fig. 5, which describes a process during which MTC UE accesses an EPS network and sends a small data packet when implementing network attachment. The MTC UE includes a small data packet and a small data packet sending identifier into PCO parameters when initiating an attach request to the EPS network; a P-GW identifies that there is a small data packet to be sent, and extracts the small data packet from the PCO parameters and encapsulates the small data packet into an appropriate IP packet, and sends the IP packet to an MTC Server via an MTCi interface; after the sending of the data is completed; a media gateway rejects creation of a bearer, and reduces interaction with a PCRF and creation of a media bearer. The specific flow includes the followings steps.

Step 501, in order to access an SAE network, the MTC UE initiates a network attach request to the eNodeB, wherein the network attach request includes information such as an IMSI, network access ability of the MTC UE, PCO parameters, and an attachment type, and etc.

The PCO parameters are protocol parameters between the MTC UE and the P-GW, including information such as an indication of a request for allocating IP, and etc; the PCO parameters are transmitted transparently between the eNodeB and an MME with a length up to 255 bytes.

For the case that the MTC UE sends a small data packet, the small data packet needed to be sent to the MTC Server may be included into PCO parameters in an attach request according to a configuration policy or according to subscription characteristics of "small data packet transmission", and at the same time a small data packet sending identifier is included into the PCO parameters. Optionally, the PCO parameters include an FQDN of the MTC server.

Step 502, the eNodeB chooses an MME to serve the MTC UE, and forwards the attach request to the MME, and at the same time carries important information such as the identifier, the attachment type and the access ability of the MTC UE, and PCO parameters, and etc. ,to the MME; wherein the PCO parameters are transmitted transparently for the MME.

Step 503, the MME sends an authentication data request message (including the IMSI) to an HSS, the HSS firstly determines subscription user data corresponding to the IMSI; if no subscription is found or the IMSI has already been listed in a blacklist, the HSS then returns an authentication data response including an error reason to the MME; if the subscription user data corresponding to the IMSI is found, then the HSS returns an authentication data response message (including an authentication vector) to the MME.

The MME executes an authentication flow to verify the legality of the IMSI of the terminal, and executes a safe mode flow to enable safe connection.

Step 504, the MME sends a location update request to the HSS of the home network; the HSS sends subscription user data to the MME according to the identifier of the MTC UE.

The MME receives the subscription user data, and checks whether the MTC UE is allowed to access the network; if it is allowed, then the MME returns a user accepted response to the HSS; if the MME finds that the MTC UE has problems such as roaming restriction or access restriction, and etc, the MME will prohibit the MTC UE from attachment, and notify the HSS. The HSS sends a location update confirmation response to the MME after the MME returns a user accepted response to the HSS.

Step 505, the MME chooses an S-GW for the MTC UE, and sends a request for creating a default bearer to it. In the request, the necessary information the MME notifies the S-GW includes: the identifier of the MTC UE, an identifier of the MME, an indication of allocating an IP address for the MTC UE, default bandwidth information, a P-GW address, PCO parameters, and etc, wherein the PCO parameters include information such as a request from the MTC UE for sending a small data packet (i.e., a small data packet sending identifier), the small data packet needed to be sent, and etc.

The S-GW sends a request for creating a default bearer to the P-GW. In the request, the necessary information the S-GW notifies the P-GW includes: an address of the S-GW, default bandwidth information, an indication of allocating an IP address for the MTC UE, PCO parameters, and etc, wherein the PCO parameters include information such as the small data packet sending identifier and the small data packet needed to be sent, and etc.

Step 506, the P-GW extracts information from the PCO parameters, and extracts the small data packet needed to be sent according to the request from the MTC UE for sending the small data packet , and encapsulates the small data packet into an IP packet format meeting the requirement of the MTCi interface.

The P-GW needs to add a destination address of the IP packet, i.e., the IP address of the MTC Server, to the IP packet. If the PCO parameters include the FQDN of the MTC Server, then the P-GW can inquire the IP address of the MTC Server from a DNS server; if the PCO parameters do not include the FQDN of the MTC Server, the P-GW can pre-statically configure a corresponding relationship between a MTC UE identifier and a MTC Server IP address, and the P-GW searches for the corresponding relationship according to the MTC UE identifier to obtain the address of the MTC Server.

Step 507, the P-GW creates safe IP connection with the MTC Server via the MTCi interface, and sends the small data packet of the MTC UE to the MTC Server, wherein the IP packet may include the identifier of the MTC UE. The MTC Server responds to the P-GW to indicate that the data packet has been received.

Step 508, after completing the sending of the data, the P-GW does not allocate resources and an IP address for the MTC UE any more, and directly sends a default bearer creation rejection message to the S-GW, wherein the indication that the sending of the small data packet is completed is included into the PCO parameters, and is notified to the MTC UE. The S-GW sends a response message of default bearer creation rejection to the MME, wherein the message includes PCO parameters.

Step 509, the MME sends an attach rejection response to the eNodeB, and rejects the attach request from the MTC UE, and at the same time, includes PCO parameters into the attach request and returns the PCO parameters to the MTC UE, wherein an indication that the sending of the small data packet is completed is included into the PCO parameters.

Step 510, after receiving the attach rejection, the eNodeB directly sends an attach rejection message to the MTC UE, and rejects the present access request, wherein the PCO parameters are included into the rejection message; when finding the indication that the sending of the small data packet is completed in the PCO parameters, the MTC UE will not try access any more, and will not initiate an attach request again after getting offline until sending of a small data packet is triggered next time.

Since the eNodeB rejects the attach request, it is necessary to allocate radio bearer resources, thereby improving the utilization ratio of the radio resources.

The second embodiment of the disclosure is as shown in Fig. 6, which describes a process of MTC UE accessing a GPRS network and sending a small data packet when implementing network attachment and creating PDP context. An MTC UE terminal includes a small data packet and a small data packet sending identifier into PCO parameters when initiating a bearer create request to the GPRS network; a GGSN identifies that there is a small data packet to be sent, and extracts the small data packet from the PCO parameters and encapsulates the small data packet into an appropriate IP packet, and sends the IP packet to an MTC Server via an MTCi interface; after the sending of the data is completed, the GGSN rejects creation of a bearer, and does not allocate a core network media bearer and a radio bearer. The specific flow includes the followings steps.

Step 601, the MTC UE initiates an attach request to an SGSN via an RNS for the first time, and includes parameters such as an attachment type, an IMSI, and etc., into the attach request.

The RNS routes the message to the SGSN by taking an IMSI of a user as a request identifier according to the load condition.

Step 602, the SGSN makes a request for authentication on the IMSI to an HLR, the HLR downloads an authentication verification parameter according the IMSI, and the SGSN authenticates and verifies the MTC UE.

Step 603, the SGSN sends a location update request to the HLR, wherein the request includes parameters such as an SGSN number and address, an IMSI, and etc.; the HLR downloads the subscription data corresponding to the IMSI to the SGSN, the SGSN performs an access control check on the MTC UE to check whether the MTC UE has area restriction or access restriction, and then returns a data insert response to the HLR. The HLR confirms the location update message, and sends a location update response to the SGSN.

Step 604, the SGSN allocates a P-TMSI to the user, and sends an attachment acceptance message to the UE, wherein the message includes information such as the P-TMSI allocated to the UE, and etc.

Step 605, if the MTC UE needs to send a small data packet, then the MTC UE initiates a PDP context create request to the SGSN to apply for PDP context activation and creates a GTP bearer.

The MTC UE sends the PDP context create request to the SGSN, wherein the request includes information such as a PDP type, a PDP address, an APN, PCO parameters, and etc. The PCO parameters are protocol parameters between the UE and the GGSN, including information such as an indication of a request for allocating IP, and etc,; and the PCO parameters are transmitted transparently between the RNS and the SGSN with a length up to 255 bytes.

For the case that the MTC UE sends a small data packet, the small data packet needed to be sent to the MTC Server can be included into the PCO parameters in the PDP context create request according to a configuration policy or according to subscription characteristics of "small data packet transmission", and at the same time the small data packet sending identifier is included into the PCO and notified to the GGSN. Optionally, the PCO parameters include an FQDN of the MTC Server.

Step 606, the SGSN finds an address of the GGSN according to an APN, and creates an TEID for the PDP context, and sends the PDP context create request to the GGSN, wherein the request includes information such as the PDP type, the PDP address, the APN, the TEID, the PCO parameters, and etc, and the small data packet sending identifier is included into the PCO parameters. Optionally, the PCO parameters include the FQDN of the MTC Server.

Step 607, the GGSN extracts information from the PCO parameters, and extracts the small data packet needed to be sent according to the request of sending the small data packet from the MTC UE, and encapsulates the small data packet into an IP packet format meeting the requirement of the MTCi interface.

The GGSN needs to add a destination address of the IP packet, i.e., an IP address of the MTC Server, to the IP packet. If the PCO parameters include the FQDN of the MTC Server, then the GGSN can inquire the IP address of the MTC Server from a DNS server; if the PCO parameters do not include the FQDN of the MTC Server, the GGSN can pre-statically configure a corresponding relationship between a MTC UE identifier and a MTC Server IP address, and the GGSN searches for the corresponding relationship according to the MTC UE identifier to obtain the address of the MTC Server.

Step 608, the GGSN creates safe IP connection with the MTC Server via the MTCi interface, and sends the small data packet of the MTC UE to the MTC Server, wherein the IP packet may include the identifier of the MTC UE. The MTC Server responds to the GGSN to indicate that the data packet has been received.

Step 609, after completing the sending of the data, the GGSN does not allocate a new entrance and relevant resources for the PDP context any more, and directly returns a PDP context activation rejection message to the SGSN, wherein the message includes parameters information such as an TEID, PCO, and etc, and an indication that the sending of the small data packet is completed is included into the PCO parameters, and is notified to the MTC UE.

Step 610, the SGSN does not send an RAB assignment request message to the RNS to apply for radio bearer resources, instead, the SGSN directly sends a PDP context creation rejection message to the MTC UE, wherein the message includes PCO parameters. When finding an indication that the sending of the small data packet is completed in the PCO parameters, the MTC UE will not try creating PDP context any more, and not initiate an attach request or a PDP context create request again until the sending of a small data packet is triggered next time.

Step 611, according to a relevant configuration policy, a terminal that sends a small data packet in an offline state can be offline, the offline can be initiated by the network or by the MTC UE. If it is initiated by the network, after initiating a PDP context creation rejection message to the MTC UE, the SGSN initiates a Detach message to the MTC UE, and notifies the MTC UE to get offline. If it is initiated by the MTC UE, after receiving the PDP context creation rejection message, the MTC UE initiates a Detach process to the SGSN.

Corresponding to the above method for transmitting a small data packet, the present disclosure further provides a system for transmitting a small data packet, including: MTC UE, a media gateway and an MTC server; wherein, the MTC UE is configured to carry a small data packet needed to be sent to the media gateway in a network during a process of creating a bearer; the media gateway is configured to send the received small data packet to the MTC server; and the MTC server is configured to receive the small data packet from the media gateway. The media gateway is a P-GW in an EPS network, and is a GGSN in a GPRS network.

The MTC UE is further configured to include the small data packet needed to be sent into an attach request or a bearer create request and to send the small data packet to the media gateway when the MTC UE initiates the attach request or bearer create request. The small data packet is included into PCO parameters of the attach request or the bearer create request.

The PCO parameters may include a small data packet sending identifier; the media gateway identifies whether it is needed to send the small data packet according to the small data packet sending identifier.

The PCO parameters may further include an FQDN of the MTC server, the media gateway inquires an address of a corresponding MTC server from a Domain Name System (DNS) server based on the FQDN, and sends the small data packet to the MTC server corresponding to the address.

The media gateway is further configured to statically configure a corresponding relationship between an MTC UE identifier and an MTC server address, and to inquire the corresponding relationship according to an MTC UE identifier included in the request to obtain an address of a corresponding MTC server when receiving the attach request or bearer create request from the MTC UE, and to send the small data packet to the MTC server corresponding to the address.

The media gateway is further configured to, after sending the small data packet, return a response message of rejecting bearer creation to the MTC UE, and not allocate core network media bearer and radio bearer resources for the MTC UE; the response message of rejecting bearer creation includes PCO parameters including an indication indicative of small data packet sending completion.

In conclusion, with the present disclosure, MTC UE initiates an access request to a PS network, and directly includes a small data packet into the access request message and sends it to a media gateway, thus avoiding allocating core network media bearer and radio bearer resources, reducing the processing related to application for and distribution of a PCC policy and the signaling interaction, reducing signaling related to media bearer creation and radio resource bearer creation, optimizing a network flow, and fulfilling the application requirement that the M2M terminal sends a small data packet in an offline state. Moreover, the method and system for transmitting a small data packet in the present disclosure can also be applied in an online transmission state.

What are mentioned above are merely preferred embodiments of the disclosure and are not intended to limit the scope of the disclosure.

## Claims

1. A method for transmitting a small data packet, **characterized in that**, comprising:
Carrying (501), by Machine-Type Communications User Equipment (MTC UE), a small data packet needed to be sent (505) to a media gateway in a network during a process of creating a bearer;
Processing (506), by the media gateway, the received small data packet, wherein the media gateway is a P-GW in an EPS network, or is a GGSN in a GPRS network; and
Sending (507), by the media gateway, the received small data packet to an MTC server;
wherein the carrying, by Machine-Type Communications User Equipment (MTC UE), a small data packet needed to be sent to a media gateway in a network during a process of creating a bearer comprises:
including, by the MTC UE, the small data packet needed to be sent into Protocol Configuration Options (PCO) parameters of an attach request or a bearer create request and sending the small data packet to the media gateway, when the MTC UE initiates the attach request or the bearer create request.

2. The method for transmitting a small data packet according to claim 1, further comprising:
including a small data packet sending identifier into the PCO parameters; and identifying, by the media gateway, whether it is needed to send the small data packet according to the small data packet sending identifier.

3. The method for transmitting a small data packet according to claim 1 or 2, further comprising:
including a Fully Qualified Domain Name (FQDN) of the MTC server into the PCO parameters; and inquiring (506), by the media gateway, an address of a corresponding MTC server from a Domain Name System (DNS) server based on the FQDN and sending the small data packet to the MTC server corresponding to the address.

4. The method for transmitting a small data packet according to claim 1 or 2, further comprising:
statically configuring (506), by the media gateway, a corresponding relationship between an MTC UE identifier and an MTC server address, and inquiring, by the media gateway, the corresponding relationship according to an MTC UE identifier included in the attach request or the bear create request to obtain an address of a corresponding MTC server and sending the small data packet to the MTC server corresponding to the address.

5. The method for transmitting a small data packet according to claim 1 or 2, further comprising:
after sending the small data packet, returning (508), by the media gateway, a response message of rejecting bearer creation to the MTC UE and not allocating core network media bearer and radio bearer resources for the MTC UE; and including PCO parameters into the response message of rejecting bearer creation, and including an indication indicative of small data packet sending completion into the PCO parameters.

6. A system for transmitting a small data packet, **characterized in that**, comprising: Machine-Type Communications User Equipment (MTC UE), a media gateway and an MTC server, wherein,
the MTC UE is configured to carry a small data packet needed to be sent to the media gateway in a network during a process of creating a bearer;
the media gateway is configured to process and send the received small data packet to the MTC server, wherein the media gateway is a P-GW in an EPS network, or is a GGSN in a GPRS network; and
the MTC server is configured to receive the small data packet from the media gateway;
wherein the MTC UE is further configured to, when the MTC UE initiates an attach request or a bearer create request, include the small data packet needed to be sent into Protocol Configuration Options (PCO) parameters of the attach request or the bearer create request and to send the small data packet to the media gateway.

7. The system for transmitting a small data packet according to claim 6, wherein the PCO parameters further include a small data packet sending identifier;
correspondingly, the media gateway is further configured to identify whether it is needed to send the small data packet according to the small data packet sending identifier.

8. The system for transmitting a small data packet according to claim 6 or 7, wherein the PCO parameters include a Fully Qualified Domain Name (FQDN) of the MTC server;
correspondingly, the media gateway is further configured to inquire an address of a corresponding MTC server from a Domain Name System (DNS) server based on the FQDN, and to send the small data packet to the MTC server corresponding to the address.

9. The system for transmitting a small data packet according to claim 6 or 7, wherein the media gateway is further configured to statically configure a corresponding relationship between an MTC UE identifier and an MTC server address, and to inquire the corresponding relationship according to an MTC UE identifier included in the attach request or the bearer create request to obtain an address of a corresponding MTC server when receiving the attach request or the bearer create request from the MTC UE, and to send the small data packet to the MTC server corresponding to the address.

10. The system for transmitting a small data packet according to claim 6 or 7, wherein the media gateway is further configured to, after sending the small data packet, return a response message of rejecting bearer creation to the MTC UE, and not allocate core network media bearer and radio bearer resources for the MTC UE; the response message of rejecting bearer creation includes an indication indicative of small data packet sending completion into the PCO parameters.

## Patentansprüche

1. Ein Verfahren zur Übertragung eines kleinen Datenpakets, **dadurch gekennzeichnet, dass** es Folgendes umfasst:
Tragen (501) eines kleinen Datenpakets, welches während eines Erstellungsprozesses eines Trägers zu einem Media-Gateway in einem Netzwerk gesendet (505) werden muss, durch ein Maschinentypkommunikations-Benutzer-Endgerät (MTC-UE);
Verarbeitung (506) des erhaltenen kleinen Datenpakets durch den Media-Gateway, wobei der Media-Gateway ein P-GW in einen EPS-Netzwerk, oder ein GGSN in einem GPRS-Netzwerk ist; und
Senden (507) des erhaltenen kleinen Datenpakets zu einem MTC-Server durch den Media-Gateway;
wobei das Tragen eines kleinen Datenpakets, welches zu einem Media-Gateway in einem Netzwerk gesendet werden muss, durch ein Maschinentypkommunikations-Benutzer-Endgerät (MTC-UE) während eines Erstellungsprozesses eines Trägers, umfasst:
Einbeziehen des kleinen Datenpakets, welches gesendet werden muss, in Protokoll-Konfigurations-Options(PCO)-Parameter einer Anbindungsanfrage oder einer Trägererstellungsanfrage, durch das MTC-UE und Senden des kleinen Datenpakets zu dem Media-Gateway, wenn das MTC-UE die Anbindungsanfrage oder die Trägererstellungsanfrage einleitet.

2. Das Verfahren zur Übertragung eines kleinen Datenpakets nach Anspruch 1, weiter umfassend:
Einbeziehen einer kleinen Datenpaket-Sendeerkennung in die PCO-Parameter; und Identifizieren durch den Media-Gateway, ob das kleine Datenpaket, gemäß der kleinen Datenpaket-Sendeerkennung, gesendet werden muss.

3. Das Verfahren zur Übertragung eines kleinen Datenpakets nach Anspruch 1 oder 2, weiter umfassend:
Einbeziehen eines vollständig qualifizierten Domainnamen (FQDN) des MTC-Servers in die PCO-Parameter; und Erfragen (506) einer Adresse eines entsprechenden MTC-Servers von einem Domainnamen-System (DNS) Server auf der Grundlage des FQDN, durch den Media-Gateway und Senden des kleinen Datenpakets gemäß der Adresse zu dem MTC-Server.

4. Das Verfahren zur Übertragung eines kleinen Datenpakets nach Anspruch 1 oder 2, weiter umfassend:
statisches Konfigurieren (506) einer entsprechenden Beziehung zwischen einer MTC-UE-Kennung und einer MTC-Serveradresse durch den Media-Gateway, und Erfragen der entsprechenden Beziehung, gemäß einer MTC-UE-Kennung, welche in die Anbindungsanfrage oder die Trägererstellungsanfrage eingeschlossen ist, durch den Media-Gateway, um eine Adresse eines entsprechenden MTC-Servers zu erhalten und Senden des kleinen Datenpakets zu dem MTC-Server, entsprechend der Adresse.

5. Das Verfahren zur Übertragung eines kleinen Datenpakets nach Anspruch 1 oder 2, weiter umfassend:
Zurückschicken (508) einer Antwortnachricht über eine Trägererstellungsabweisung zu dem MTC-UE und nicht Zuteilen von Kernnetzwerkmedienträgern und Funkträgerressourcen für das MTC-UE, durch den Media-Gateway, nachdem das kleine Datenpaket gesendet wurde; und Einbeziehen von PCO-Parametern in die Antwortnachricht über die Trägererstellungsabweisung, und Einbeziehen eines Kennungshinweises eines Sendeabschlusses des kleinen Datenpakets in die PCO-Parameter.

6. Ein System zur Übertragung eines kleinen Datenpakets, **dadurch gekennzeichnet, dass** es Folgendes umfasst:
Maschinentypkommunikations-Benutzer-Endgerät (MTC-UE), einen Media-Gateway und einen MTC-Server, wobei,
das MTC-UE derart ausgestaltet ist, ein kleines Datenpaket zu tragen, welches während eines Erstellungsprozesses eines Trägers zu dem Media-Gateway in einem Netzwerk gesendet werden muss;
der Media-Gateway derart ausgestaltet ist, das erhaltene kleine Datenpaket zu verarbeiten und zu dem MTC-Server zu senden, wobei der Media-Gateway ein P-GW in einem EPS-Netzwerk, oder ein GGSN in einem GPRS-Netzwerk ist; und
der MTC-Server derart ausgestaltet ist, das kleine Datenpaket von dem Media-Gateway zu erhalten;
wobei der MTC-UE weiter derart ausgestaltet ist, das kleine Datenpaket, welches gesendet werden muss, in Protokoll-Konfigurations-Options (PCO)-Parameter der Anbindungsanfrage oder der Trägererstellungsanfrage einzubeziehen, wenn das MTC-UE eine Anbindungsanfrage oder eine Trägererstellungsanfrage einleitet und das kleine Datenpaket zu dem Media-Gateway zu senden.

7. Das System zur Übertragung eines kleinen Datenpakets nach Anspruch 6, wobei die PCO-Parameter weiter eine kleine Datenpaket-Sendeerkennung beinhalten;
entsprechend ist der Media-Gateway weiter derart ausgestaltet, zu identifizieren, ob das kleine Datenpaket gemäß der kleinen Datenpaket-Sendeerkennung gesendet werden muss.

8. Das System zur Übertragung eines kleinen Datenpakets nach Anspruch 6 oder 7, wobei die PCO-Parameter einen vollständig qualifizierten Domainnamen (FQDN) des MTC-Servers beinhalten;
entsprechend ist der Media-Gateway weiter derart ausgestaltet, eine Adresse eines entsprechenden MTC-Servers von einem Domainnamen-System (DNS) Server auf der Grundlage des FQDN zu erfragen und das kleine Datenpaket entsprechend der Adresse zu dem MTC-Server zu senden.

9. Das System zur Übertragung eines kleinen Datenpakets nach Anspruch 6 oder 7, wobei
der Media-Gateway weiter derart ausgestaltet ist, eine entsprechende Beziehung zwischen einer MTC-UE-Kennung und einer MTC-Serveradresse statisch zu konfigurieren, und eine entsprechende Beziehung gemäß einer MTC-UE-Kennung, welche in die Anbindungsanfrage oder die Trägererstellungsanfrage eingeschlossen ist, zu erfragen, um eine Adresse eines entsprechenden MTC-Servers zu erhalten, wenn die Anbindungsanfrage oder die Trägererstellungsanfrage von dem MTC-UE erhalten wurde, und das kleine Datenpaket, entsprechend der Adresse, zu dem MTC-Server zu senden.

10. Das System zur Übertragung eines kleinen Datenpakets nach Anspruch 6 oder 7, wobei
der Media-Gateway weiter derart ausgestaltet ist, eine Antwortnachricht über eine Trägererstellungsabweisung zu dem MTC-UE zurückzuschicken und Kernnetzwerkmedienträger und Funkträgerressourcen für das MTC-UE nicht zuzuteilen, nachdem das kleine Datenpaket gesendet wurde;
die Antwortnachricht über die Trägererstellungsabweisung einen Kennungshinweis auf einen Sendeabschluss des kleinen Datenpakets in die PCO-Parameter einbezieht.

## Revendications

1. Procédé pour transmettre un petit paquet de données, **caractérisé en ce qu'**il comprend :
l'acheminement (501), par un Equipement d'utilisateur de Communications de type machine (MTC UE), d'un petit paquet de données qui a besoin d'être envoyé (505) à une passerelle de média dans un réseau au cours d'un processus de création d'un support ;
le traitement (506), par la passerelle de média, du petit paquet de données reçu, dans lequel la passerelle de média est une P-GW dans un réseau EPS, ou est un GGSN dans un réseau GPRS ; et
l'envoi (507), par la passerelle de média, du petit paquet de données reçu à un serveur MTC ;
dans lequel l'acheminement, par un Equipement d'utilisateur de Communications de type machine (MTC UE), d'un petit paquet de données qui a besoin d'être envoyé à une passerelle de média dans un réseau au cours d'un processus de création d'un support comprend :
l'inclusion, par le MTC UE, du petit paquet de données qui a besoin d'être envoyé dans des paramètres d'Options de configuration de protocole (PCO) d'une demande de rattachement ou d'une demande de création de support et l'envoi du petit paquet de données à la passerelle de média, lorsque le MTC UE initie la demande de rattachement ou la demande de création de support.

2. Procédé pour transmettre un petit paquet de données selon la revendication 1, comprenant en outre :
l'inclusion d'un identificateur d'envoi de petit paquet de données dans les paramètres PCO ; et l'identification, par la passerelle de média, s'il est nécessaire d'envoyer le petit paquet de données selon l'identificateur d'envoi de petit paquet de données.

3. Procédé pour transmettre un petit paquet de données selon la revendication 1 ou 2, comprenant en outre :
l'inclusion d'un Nom de domaine complètement qualifié (FQDN) du serveur MTC dans les paramètres PCO ; et l'interrogation (506), par la passerelle de média, d'une adresse d'un serveur MTC correspondant à partir d'un serveur de Système de noms de domaine (DNS) sur la base du FQDN et l'envoi du petit paquet de données au serveur MTC correspondant à l'adresse.

4. Procédé pour transmettre un petit paquet de données selon la revendication 1 ou 2, comprenant en outre :
la configuration statique (506), par la passerelle de média, d'une relation correspondante entre un identificateur MTC UE et une adresse de serveur MTC, et l'interrogation, par la passerelle de média, de la relation correspondante selon un identificateur MTC UE inclus dans la demande de rattachement ou la demande de création de support pour obtenir une adresse d'un serveur MTC correspondant et l'envoi du petit paquet de données au serveur MTC correspondant à l'adresse.

5. Procédé pour transmettre un petit paquet de données selon la revendication 1 ou 2, comprenant en outre :
après l'envoi du petit paquet de données, le retour (508), par la passerelle de média, d'un message de réponse de rejet de création de support au MTC UE et la non-allocation de support de média de réseau coeur et de ressources de support radio pour le MTC UE ; et l'inclusion de paramètres PCO dans le message de réponse de rejet de création de support, et l'inclusion d'une indication indicative de l'achèvement d'envoi de petit paquet de données dans les paramètres PCO.

6. Système pour transmettre un petit paquet de données, **caractérisé en ce qu'**il comprend : un Equipement d'utilisateur de Communications de type machine (MTC UE), une passerelle de média et un serveur MTC, dans lequel,
le MTC UE est configuré pour acheminer un petit paquet de données qui a besoin d'être envoyé à la passerelle de média dans un réseau au cours d'un processus de création d'un support ;
la passerelle de média est configurée pour traiter et envoyer le petit paquet de données reçu au serveur MTC, dans lequel la passerelle de média est une P-GW dans un réseau EPS, ou est un GGSN dans un réseau GPRS ; et
le serveur MTC est configuré pour recevoir le petit paquet de données en provenance de la passerelle de média ;
dans lequel le MTC UE est en outre configuré pour, lorsque le MTC UE initie une demande de rattachement ou une demande de création de support, inclure le petit paquet de données qui a besoin d'être envoyé dans des paramètres d'Options de configuration de protocole (PCO) de la demande de rattachement ou de la demande de création de support et envoyer le petit paquet de données à la passerelle de média.

7. Système pour transmettre un petit paquet de données selon la revendication 6, **caractérisé en ce que** les paramètres PCO incluent en outre un identificateur d'envoi de petit paquet de données ;
de manière correspondante, la passerelle de média est en outre configurée pour identifier s'il est nécessaire d'envoyer le petit paquet de données selon l'identificateur d'envoi de petit paquet de données.

8. Système pour transmettre un petit paquet de données selon la revendication 6 ou 7, dans lequel les paramètres PCO incluent un Nom de domaine complètement qualifié (FQDN) du serveur MTC ;
de manière correspondante, la passerelle de média est en outre configurée pour interroger une adresse d'un serveur MTC correspondant à partir d'un serveur de Système de noms de domaine (DNS) sur la base du FQDN, et envoyer le petit paquet de données au serveur MTC correspondant à l'adresse.

9. Système pour transmettre un petit paquet de données selon la revendication 6 ou 7, dans lequel la passerelle de média est en outre configurée pour configurer statiquement une relation correspondante entre un identificateur MTC UE et une adresse de serveur MTC, et interroger la relation correspondante selon un identificateur MTC UE inclus dans la demande de rattachement ou la demande de création de support pour obtenir une adresse d'un serveur MTC correspondant lors de la réception de la demande de rattachement ou de la demande de création de support en provenance du MTC UE, et envoyer le petit paquet de données au serveur MTC correspondant à l'adresse.

10. Système pour transmettre un petit paquet de données selon la revendication 6 ou 7, dans lequel la passerelle de média est en outre configurée pour, après l'envoi du petit paquet de données, retourner un message de réponse de rejet de création de support au MTC UE, et ne pas allouer de support de média de réseau coeur et de ressources de support radio pour le MTC UE ; le message de réponse de rejet de création de support inclut une indication indicative de l'achèvement d'envoi de petit paquet de données dans les paramètres PCO.
